# EUROPÄISCHE PATENTANMELDUNG

(11) **EP 3 702 640 A1**
(43) Veröffentlichungstag der Anmeldung: **02.09.2020**
(21) Anmeldenummer: 19160222.6
(22) Anmeldetag: 01.03.2019
(51) Int. Cl.: F16F 15/26

(54) **UNWUCHTAUSGLEICH FÜR EINEN VERBRENNUNGSMOTOR**

(71) Anmelder: Deere & Company, Moline, IL 61265 (US)
(72) Erfinder: Nowack, Wolfgang, 68163 Mannheim (DE); Steinhoff, Dietmar K, 68163 Mannheim (DE); Jürges, Gunnar, 68163 Mannheim (DE)
(74) Vertreter: Lavall, Christian Henner

(57) **Zusammenfassung**

Keilriemenscheibe für einen Verbrennungsmotor, geeignet zur Befestigung und zum Antrieb eines Keilriemens mit einer zentralen Rotationsachse, einer Innenbohrung zur Befestigung auf einer Antriebswelle des Verbrennungsmotors, einer Nut zur Positionsausrichtung auf einer Antriebswelle, einem Unwuchtausgleich der an einem äußeren Bereich der Keilriemenscheibe ausgebildet ist.

## Beschreibung

Die vorliegende Erfindung betrifft einen Unwuchtausgleich an einer Keilriemenscheibe eines Rasenmähers und einen Antriebsstrang mit einem Unwuchtausgleich.

Dynamische und statische Unwucht an einem im Betrieb rotierenden Bauteil führt zu Schwingungen im Betrieb. Die Schwingungen können dabei in Form von Vibrationen auftreten, die sich durch die gesamte Konstruktion fortsetzen. Bei Geräten, die handgeführten Arbeitsgeräten oder Maschinen mit einem Personenstand werden diese Vibrationen von der bedienenden Person wahrgenommen und können als störend empfunden werden. Die Vibrationen können auch auf den Körper der Bedienperson einwirken und gesundheitliche Auswirkungen verursachen. Die Vibrationen können auch weitere Bauteile in Geräten zu Schwingungen anregen, so dass insgesamt Vibrationsgeräusche verursacht werden, welche die Betriebslautstärke des Gerätes verstärken. Wenn Vibrationen an oder nahe an einer Resonanzfrequenz einzelner Bauteile auftreten, kann dies auch zu einem technischen Versagen führen.

US4262548 beschreibt einen Unwuchtausgleich an einem Schwungrad. Ein Gegengewicht wird am Schwungrad angebracht, das sich gegenüber einem Kolben in der Position eines oberen Totpunktes befindet.

Die Erfindung hat die Aufgabe, einen Unwuchtausgleich zur Verfügung zu stellen, der einfach in ein Gerät zu integrieren ist.

Die Aufgabe wird durch die Erfindung nach einem der Haupt- oder Nebenansprüche gelöst.

Eine Erfindung beschreibt eine Keilriemenscheibe für einen Verbrennungsmotor, geeignet zur Befestigung und zum Antrieb eines Keilriemens, die eine zentrale Rotationsachse, eine Innenbohrung zur Befestigung auf einer Antriebswelle des Verbrennungsmotors, eine Nut zur Positionsausrichtung auf einer Antriebswelle und einen Unwuchtausgleich aufweist, wobei der Unwuchtausgleich an einem äußeren Bereich der Keilriemenscheibe ausgebildet ist, und in einem Winkel zur Nut angebracht ist.

Die Keilriemenscheibe dient zur Übertragung des Antriebsmoments auf einen Keilriemen. Durch Vorsehen des Unwuchtausgleichs an der Keilriemenscheibe wird die Anbringung eines zusätzlichen Bauteils vermieden, da eine Keilriemenscheibe stets in zeitgemäßen Rasenmähern verbaut ist. Der Unwuchtausgleich kann in Form einer Materialentfernung oder als Materialhinzufügung vorliegen. Eine Materialentfernung reduziert das Betriebsgewicht und die Bedienung wird vereinfacht. Durch den Unwuchtausgleich an der Keilriemenscheibe wird die gesamte Vibration vermindert, die durch den Verbrennungsmotor erzeugt wird. Besonders kann die Vibration, die in einem handgeführten Gerät am Handgriff auftritt, gesenkt werden. Der Bedienkomfort wird gesteigert. Mit Vorsehen des Unwuchtausgleichs an der Keilriemenscheibe kann ein kompakter Antriebsaufbau für einen Rasenmäher umgesetzte werden.

In einer weiteren Ausbildung kann der Unwuchtausgleich an einem Grundkörper der Keilriemenscheibe ausgebildet sein.

Der Unwuchtausgleich kann einstückig an der Keilriemenscheibe vorgesehen werden. Ein weiterer Montageschritt im Fertigungsprozess ist nicht notwendig.

Bei einer Weiterbildung kann ein äußerer Bereich der Keilriemenscheibe zur Nut verdrehbar ausgebildet sein, so dass ein Winkel des Unwuchtausgleichs zur Nut veränderbar ist.

Die Verdrehbarkeit ermöglicht eine einfache Einstellung des Angriffswinkels des Unwuchtausgleichs. Der Unwuchtausgleich kann vorab in einem normierten Prozessschritt gefertigt werden. Bei der Montage der Keilriemenscheibe kann die Position des Unwuchtausgleichs im Verhältnis zur Kolbenstellung eingestellt und fixiert werden, wobei eine Bestimmung der Unwuchtmasse entfallen kann. Bei einer ausgemessenen und bestimmten Unwuchtmasse kann das Verdrehen ein Anpassen der Vibrationen ermöglichen.

In einer Ausführung kann die Keilriemenscheibe einen äußeren Bereich aufweisen, der durch wenigstens eine separat ausgebildete Scheibe gebildet ist, wobei der Unwuchtausgleich an einem äußeren Bereich der Scheibe ausgebildet ist.

Die Scheibe kann auf einfache Weise gefertigt werden. Der Unwuchtausgleich kann durch Abschneiden eines Teils der Scheibe ausgeführt werden, wobei mehrere Scheiben übereinander gefügt auf die Keilriemenscheibe gesetzt werden können. Die Scheibe kann mittels einer Zentrierung ausgerichtet werden.

Bei einer Weiterbildung kann die Scheibe durch eine Befestigung an der Keilriemenscheibe positioniert und gehalten sein.

Die Befestigung ermöglicht ein einfaches Anbringen.

In einer Ausbildung kann die Befestigung als Schraubenverbindung, Stiftverbindung oder Nietverbindung ausgebildet sein.

Mittels der Befestigung kann die Scheibe an der Keilriemenscheibe montiert werden. Bei mehreren Scheiben können diese gemeinsam gehalten werden.

Bei einer Ausführung kann die Scheibe axial auf dem Grundkörper durch wenigstens einen Sicherungsring gehalten sein.

Die Scheibe kann durch eine axiale Sicherung gehalten sein. Dabei kann die Scheibe auf die Keilriemenscheibe aufgelegt werden und gleichzeitig gegen Verdrehen, z.b durch eine Nut, gesichert werden. Dies ermöglicht eine einfache Fertigung und Montage.

Eine weitere Erfindung betrifft einen Rasenmäher, der einen Verbrennungsmotor, mit einem Antriebsstrang, aufweist, weiterhin eine Antriebswelle, eine Keilriemenscheibe, geeignet zur Befestigung und zum Antrieb eines Keilriemens, die drehfest auf der Antriebswelle angebracht ist, eine zentrale Rotationsachse, eine Innenbohrung zur Befestigung auf einer Antriebswelle des Verbrennungsmotors, eine Nut zur Positionsausrichtung auf einer Antriebswelle und einen Unwuchtausgleich, wobei der Unwuchtausgleich an einem äußeren Bereich der Keilriemenscheibe ausgebildet ist, und der Unwuchtausgleich in einem Winkel zur Nut angebracht ist.

Der Rasenmäher ermöglicht eine Reduktion der Vibrationen, vorzugsweise an einem handgeführten Rasenmäher, so dass die benutzende Person eine reduzierte Vibration am Handgriff spürt. Durch die Reduktion kann auch die Emission von Lärm reduziert werden, wenn weniger Bauteile am Rasenmäher in Schwingungen versetzt werden.

Bei einer Ausbildung kann die Keilriemenscheibe einen äußeren Bereich aufweisen, der durch wenigstens eine separat ausgebildete Scheibe gebildet ist, wobei der Unwuchtausgleich an einem äußeren Bereich der Scheibe ausgebildet ist.

Die Scheibe kann auf einfache Weise gefertigt werden. Der Unwuchtausgleich kann durch Abschneiden eines Teils der Scheibe ausgeführt werden, wobei mehrere Scheiben übereinander gefügt auf die Keilriemenscheibe gesetzt werden können. Die Scheibe kann mittels einer Zentrierung ausgerichtet werden.

In einer Ausführung können zwischen dem Verbrennungsmotor und dem Gehäuse Dämpfungselemente angebracht sein, welche die Schwingungen des Verbrennungsmotors, die an das Gehäuse abgegeben werden, dämpfen.

Die Dämpfungselemente dämpfen, über die Reduktion durch den Unwuchtausgleich hinaus, nochmals die Vibrationen, welche vom Verbrennungsmotor an den restlichen Rasenmäher und seine Bauteile abgegeben werden.

Eine weitere Erfindung betrifft einen Antriebsstrang für einen Rasenmäher, der eine Antriebswelle, eine Keilriemenscheibe, geeignet zur Befestigung und zum Antrieb eines Keilriemens, die drehfest auf der Antriebswelle angebracht ist, eine zentrale Rotationsachse, eine Innenbohrung zur Befestigung auf einer Antriebswelle des Verbrennungsmotors, eine Nut zur Positionsausrichtung auf einer Antriebswelle und einen Unwuchtausgleich aufweist, wobei der Unwuchtausgleich an einem äußeren Bereich der Keilriemenscheibe ausgebildet ist, und der Unwuchtausgleich in einem Winkel zur Nut angebracht ist.

Der Unwuchtausgleich kann in Form einer Materialentfernung oder als Materialhinzufügung vorliegen. Eine Materialentfernung reduziert das Betriebsgewicht und die Bedienung wird vereinfacht. Durch den Unwuchtausgleich an der Keilriemenscheibe wird die gesamte Vibration vermindert, die durch den Verbrennungsmotor erzeugt wird. Besonders kann die Vibration, die in einem handgeführten Gerät am Handgriff auftritt, gesenkt werden. Der Bedienkomfort wird gesteigert. Eine Reduktion der Vibrationen, vorzugsweise an einem handgeführten Rasenmäher, führt dazu, dass eine benutzende Person eine reduzierte Vibration am Handgriff spürt. Durch die Reduktion kann auch die Emission von Lärm reduziert werden, wenn weniger Bauteile am Rasenmäher in Schwingungen versetzt werden.

In einer Ausführung kann die Keilriemenscheibe einen äußeren Bereich aufweisen, der durch wenigstens eine separat ausgebildete Scheibe gebildet ist, wobei der Unwuchtausgleich an einem äußeren Bereich der Scheibe ausgebildet ist.

Der Unwuchtausgleich kann durch Abschneiden eines Teils der Scheibe ausgeführt werden, wobei mehrere Scheiben übereinander gefügt auf die Keilriemenscheibe gesetzt werden können. Die Scheibe kann mittels einer Zentrierung ausgerichtet werden.

Bei einer Weiterbildung kann ein Winkel zwischen dem Unwuchtausgleich und der Mitte der Nut (20) an der zentralen Rotationsachse 16 40 bis 50 Grad, bevorzugt 45 bis 48 Grad, besonders bevorzugt 46 bis 47 Grad betragen.

Bei diesen Winkeln ist besonders bei einem Ein-Zylinder-Motor eine hervorragende Eignung zur Reduzierung der Vibrationen festgestellt worden. Durch die Reduktion werden die Vibrationen am Handgriff eines Rasenmäher stark gedämpft.

Weitere Ausbildungen der Erfindung werden anhand der Figuren beschrieben. Dabei zeigt
Figur 1 eine Ausführung der Keilriemenscheibe in einer einstückigen Variante;
Figur 2 eine Ausführung der Keilriemenscheibe mit mehreren Scheiben;
Figur 3 eine Ausführung der Keilriemenscheibe mit mehreren Scheiben;
Figur 4 eine weitere Ausführung der Keilriemenscheibe mit mehreren Scheiben.

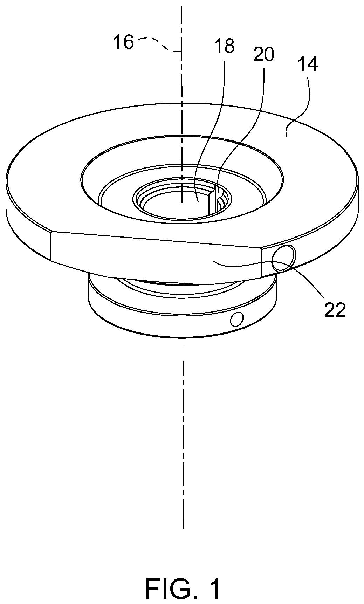

**Figur 1** zeigt eine Ansicht der Keilriemenscheibe 14. Sie weist eine zentrale Rotationsachse 16 auf, die gleichzeitig die Achse der Innenbohrung 18 darstellt, und um welche die Keilriemenscheibe im Betrieb rotiert. An der Innenbohrung 18 ist weiterhin eine Nut 20 angebracht, die zum Positionieren der Keilriemenscheibe 14 auf einer Antriebswelle 12 dient. An einem äußeren Bereich der Keilriemenscheibe 14 ist der Unwuchtausgleich 22 ausgebildet, der durch eine Materialentfernung vorgenommen ist. Zwischen der Mitte des Unwuchtausgleichs 22 und der Nut 20 ist ein Winkel eingeschlossen, der dazu dient, den genauen Zeitpunkt festzulegen, an dem der Unwuchtausgleich 22 zum Einsatz kommt. Der Zeitpunkt ist auf einen oberen Totpunkt eines Kolbens abgestimmt, der im Verbrennungsmotor verwendet wird. Der Unwuchtausgleich kann entsprechend der vorhandenen Unwucht beliebig in Größe und Winkel angepasst werden. Der Unwuchtausgleich kann auch an einem kleineren Umfang der Keilriemenscheibe angebracht werden. Die Nut 20 an der Innenbohrung 18 kann als Keilnut ausgebildet sein. Jedoch kann eine beliebige Form gewählt werden, die eine Positionierung der Keilriemenscheibe am Umfang der Antriebswelle ermöglicht.

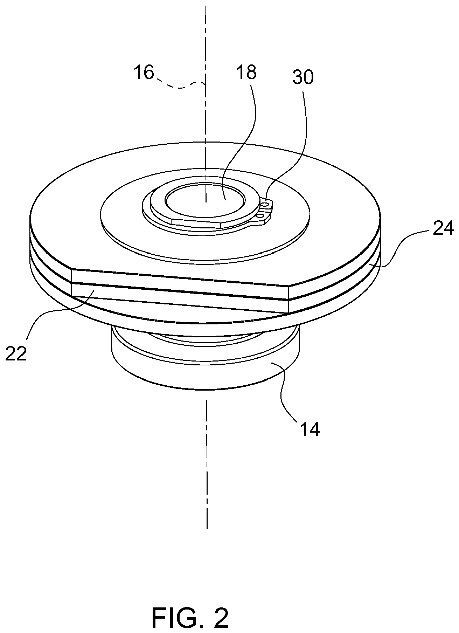

**Figur 2** zeigt eine Keilriemenscheibe 14 mit einem Grundkörper, der die Aufnahme des Keilriemens enthält. Die Keilriemenscheibe 14 weist, wie bereits beschrieben, eine zentrale Rotationsachse 16 auf, die mit einer Antriebswelle, auf welche die Keilriemenscheibe 14 aufgeschoben wird, zusammenfällt. Um diese zentrale Rotationsachse 16 rotiert die Keilriemenscheibe 14 während dem Betrieb. Die Keilriemenscheibe 14 weist einen Achsansatz auf, auf dem zwei Scheiben 24 aufgesteckt sind. Die Scheiben 24 weisen eine Innenbohrung auf, mit der diese über den Achsansatz eingepasst sind. Es kann eine Abflachung an einer Seite der Scheiben 24 vorgesehen sein, um diese winkelgenau auf der Keilriemenscheibe 14 zu positionieren. Die Scheiben 24 weisen an einem Außenbereich einen Unwuchtausgleich 24 auf, der in Form einer Materialentfernung ausgebildet ist. Ein axiale Sicherung in Form eines Sicherungsrings 30 hält die Scheiben 24 in Position auf der Keilriemenscheibe 14. Durch die Scheiben 24 kann der Unwuchtausgleich 22 variabel ausgeführt werden. In diesem Fall kommt stets die gleiche Keilriemenscheibe 14 mit dem Achsansatz zur Verwendung. Sollte nun eine größere oder kleinere Unwucht ausgeglichen werden, kann dies durch Wegnahme oder Hinzufügung einer oder mehrerer Scheiben 24 erfolgen. Dabei können die einzelnen Materialentfernungen stets identisch sein, so dass eine standardisierte Fertigung der Scheiben 24 ermöglicht ist. Weiterhin ist es möglich, die Winkelposition der Scheiben variabel zu gestalten. Dafür kann am Achsansatz ein Keilprofil angebracht werden oder ein beliebiges Zahnprofil. Die Scheiben 24 können ein entsprechendes Profil an der Innenbohrung aufweisen. Durch das Einschieben der Scheiben 24 auf unterschiedliche Winkelpositionen kann die Position des Unwuchtausgleichs 22 beliebig in Umfangsrichtung variiert werden.

Die Scheiben 24 können weiterhin durch eine Stiftverbindung zusammengehalten werden, die durch die Scheiben 24 hindurchgreift und in der Keilriemenscheibe 14 befestigt ist.

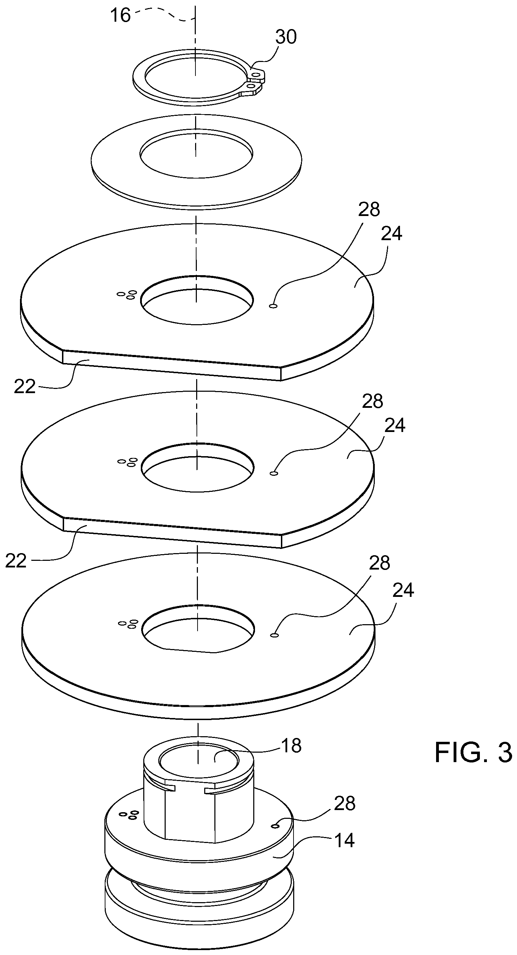

**Figur 3** zeigt eine Ansicht einer Keilriemenscheibe 14 in einer Explosionsansicht. Dabei ist die gesamte Konstruktion axial auseinandergezogen dargestellt. Die Keilriemenscheibe 14 weist eine Nut für den Eingriff des Keilriemens auf. In einer Schulter der Nut sind entsprechende Bohrungen 28 für eine Befestigung der Scheiben 24 angebracht. Diese Bohrungen können dem Einpassen von Stiften dienen, aber auch als Schraubverbindung ausgeführt sein. Im Anschluss an die Schulter befindet sich der Achsansatz mit einer Innenbohrung 18 zur Aufnahme einer Antriebswelle 12. Die Innenbohrung kann eine Keilnut aufweisen.

Die Scheiben 24 können als Vollscheibe oder als Scheibe mit Materialentfernung ausgeführt sein. Sie weisen zusätzlich Durchgangsbohrungen an der zentralen Rotationsachse 16 auf, die zur Befestigung an der Keilriemenscheibe 14 dienen. An der Innenbohrung könne die Scheiben 24 eine Abflachung haben, um eine winkelgenaue Positionierung auf dem Achsansatz zu ermöglichen.

Je nach axialer Länge des Achsansatzes können mehrere Scheiben 24 an der Keilriemenscheibe 14 angebracht werden. Dadurch ist eine Variabilität über die Größe des Unwuchtausgleichs 22 gegeben, so dass die Keilriemenscheibe 14 für mehrere Anwendungsfälle oder mehrere Modelle verwendet werden kann.

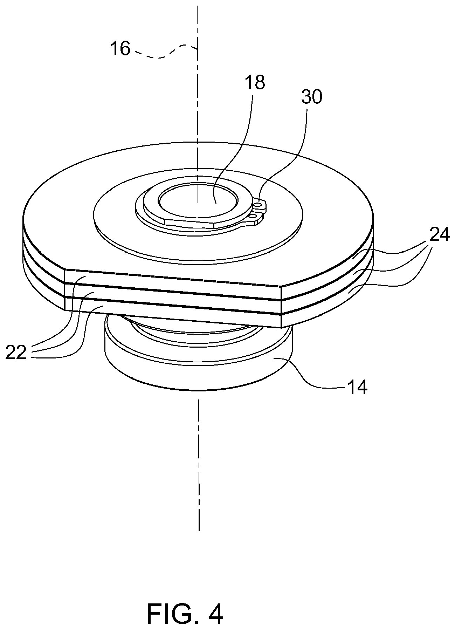

**Figur 4** zeigt eine Variante der Keilriemenscheibe 14, wobei alle Scheiben 24 eine Materialaussparung in Form eines Unwuchtausgleichs 22 aufweisen. Die Scheiben 24 sind identisch zu den bereits beschriebenen Varianten übereinandergelegt und an der Keilriemenscheibe 14 befestigt und axial mit einem Sicherungsring 30 fixiert. Dabei kann eine Abdeckscheibe mit dem Sicherungsring verwendet werden.

Durch den Unwuchtausgleich 22 an allen verwendeten Scheiben 24 kann die Unwuchtmasse erhöht und damit der Effekt des Ausgleichs gesteigert werden.

## Patentansprüche

1. Keilriemenscheibe (14) für einen Verbrennungsmotor, geeignet zur Befestigung und zum Antrieb eines Keilriemens, aufweisend
eine zentrale Rotationsachse (16),
eine Innenbohrung (18) zur Befestigung auf einer Antriebswelle des Verbrennungsmotors, eine Nut (20) zur Positionsausrichtung auf einer Antriebswelle, einen Unwuchtausgleich (22),
wobei der Unwuchtausgleich (22) an einem äußeren Bereich der Keilriemenscheibe (14) ausgebildet ist, und
in einem Winkel zur Nut (20) angebracht ist.

2. Keilriemenscheibe (14) nach Anspruch 1, **dadurch gekennzeichnet, dass** der Unwuchtausgleich (22) an einem Grundkörper der Keilriemenscheibe (14) ausgebildet ist.

3. Keilriemenscheibe (14) nach Anspruch 1, **dadurch gekennzeichnet, dass** ein äußerer Bereich der Keilriemenscheibe (14) zur Nut (20) verdrehbar ausgebildet ist, so dass ein Winkel (26) des Unwuchtausgleichs (22) zur Nut (20) veränderbar ist.

4. Keilriemenscheibe (14) nach Anspruch 1, **dadurch gekennzeichnet, dass** die Keilriemenscheibe (14) einen äußeren Bereich aufweist, der durch wenigstens eine separat ausgebildete Scheibe (24) gebildet ist,
wobei der Unwuchtausgleich (22) an einem äußeren Bereich der Scheibe (24) ausgebildet ist.

5. Keilriemenscheibe (14) nach Anspruch 4, **dadurch gekennzeichnet, dass** die Scheibe (24) durch eine Befestigung an der Keilriemenscheibe (14) positioniert und gehalten ist.

6. Keilriemenscheibe (14) nach Anspruch 5, **dadurch gekennzeichnet, dass** die Befestigung als Schraubenverbindung, Stiftverbindung oder Nietverbindung ausgebildet ist.

7. Keilriemenscheibe (14) nach Anspruch 6, **dadurch gekennzeichnet, dass** die Scheibe (24) axial auf dem Grundkörper durch wenigstens einen Sicherungsring gehalten ist.

8. Rasenmäher, aufweisend einen Verbrennungsmotor, mit einem Antriebsstrang, aufweisend,
eine Antriebswelle,
eine Keilriemenscheibe (14), geeignet zur Befestigung und zum Antrieb eines Keilriemens, die drehfest auf der Antriebswelle angebracht ist,
eine zentrale Rotationsachse (16),
eine Innenbohrung (18) zur Befestigung auf einer Antriebswelle des Verbrennungsmotors, eine Nut (20) zur Positionsausrichtung auf einer Antriebswelle, einen Unwuchtausgleich (22),
wobei der Unwuchtausgleich (22) an einem äußeren Bereich der Keilriemenscheibe (14) ausgebildet ist, und
der Unwuchtausgleich (22) in einem Winkel zur Nut (20) angebracht ist.

9. Rasenmäher nach Anspruch 8, **dadurch gekennzeichnet, dass** die Keilriemenscheibe (14) einen äußeren Bereich aufweist, der durch wenigstens eine separat ausgebildete Scheibe (24) gebildet ist,
wobei der Unwuchtausgleich (22) an einem äußeren Bereich der Scheibe (24) ausgebildet ist.

10. Rasenmäher nach Anspruch 8 oder 9, **dadurch gekennzeichnet, dass** zwischen dem Verbrennungsmotor und dem Gehäuse Dämpfungselemente angebracht sind, welche die Schwingungen des Verbrennungsmotors, die an das Gehäuse abgegeben werden, dämpfen.

11. Antriebsstrang für einen Rasenmäher, aufweisend,
eine Antriebswelle,
eine Keilriemenscheibe (14), geeignet zur Befestigung und zum Antrieb eines Keilriemens, die drehfest auf der Antriebswelle angebracht ist,
eine zentrale Rotationsachse (16),
eine Innenbohrung (18) zur Befestigung auf einer Antriebswelle des Verbrennungsmotors, eine Nut (20) zur Positionsausrichtung auf einer Antriebswelle, einen Unwuchtausgleich (22),
wobei der Unwuchtausgleich (22) an einem äußeren Bereich der Keilriemenscheibe (14) ausgebildet ist, und
der Unwuchtausgleich (22) in einem Winkel zur Nut (20) angebracht ist.

12. Antriebsstrang nach Anspruch 11, **dadurch gekennzeichnet, dass** die Keilriemenscheibe (14) einen äußeren Bereich aufweist, der durch wenigstens eine separat ausgebildete Scheibe (24) gebildet ist, wobei der Unwuchtausgleich (22) an einem äußeren Bereich der Scheibe (24) ausgebildet ist.

13. Keilriemenscheibe nach einem der vorangehenden Ansprüche, **dadurch gekennzeichnet, dass** ein Winkel zwischen dem Unwuchtausgleich und der Mitte der Nut (20) an der zentralen Rotationsachse 16 40 bis 50 Grad, bevorzugt 45 bis 48 Grad, besonders bevorzugt 46 bis 47 Grad beträgt.
